# EUROPÄISCHE PATENTANMELDUNG

(11) **EP 2 301 735 A2**
(43) Veröffentlichungstag der Anmeldung: **30.03.2011**
(21) Anmeldenummer: 09014483.3
(22) Anmeldetag: 20.11.2009
(51) Int. Cl.: B29B 11/16

(54) **Halbzeug und Halbzeugverbund sowie Herstellungsverfahren**

(30) Priorität: 29.09.2009 DE 102009043280
(71) Anmelder: Karl Mayer Malimo Textilmaschinenfabrik GmbH, 09117 Chemnitz (DE)
(72) Erfinder: Grünert, Jan, 09112 Chemnitz (DE); Heinrich, Hans-Jürgen, 09247 Röhrsdorf (DE)
(74) Vertreter: Knoblauch, Andreas

(57) **Zusammenfassung**

Es wird ein Halbzeug mit Kunststoff und Verstärkungsfasern (3) angegeben. Es wird auch ein Verfahren zum Herstellen eines Solchen Halbzeugs angegeben.

Man möchte eine Alternative zu Metallblechen zur Verfügung stellen.

Hierzu ist vorgesehen, dass die Verstärkungsfasern (3) zwischen zwei Lagen (10,11) aus thermoplastischem Kunststoff angeordnet sind.

## Beschreibung

Die Erfindung betrifft ein Halbzeug mit Kunststoff und Verstärkungsfasern.

Ferner betrifft die Erfindung einen Halbzeugverbund.

In vielen Bereichen der Technik werden Bauteile aus faserverstärktem Kunststoff verwendet. Bauteile aus faserverstärktem Kunststoff haben gegenüber Bauteilen aus Metall den Vorteil höherer spezifischer mechanischer Eigenschaften. Darüber hinaus können Kunststoffe auch in Bereichen eingesetzt werden, wo Metalle korrodieren würden.

Um ein Bauteil aus einem faserverstärkten Kunststoff zu erzeugen, werden üblicherweise die Verstärkungsfasern in eine Form eingelegt und der Kunststoff dann eingebracht. Der Kunststoff bildet dann eine Matrix, die durch die Verstärkungsfasern verstärkt ist. Damit lassen sich zwar viele Bauteile herstellen, eine spätere Umformung derartiger Bauteile ist in der Regel jedoch nur mit großen Schwierigkeiten möglich.

Aus diesem Grund verwendet man nach wie vor Metallbleche als Halbzeuge, um bestimmte Bauteile zu fertigen. Derartige Metallbleche lassen sich beispielsweise durch Tiefziehen verformen. Ein tief gezogenes Bauelement aus einem Metallblech, beispielsweise ein Bestandteil einer Autokarosserie, lässt sich nur mit einem erheblichen Aufwand durch ein entsprechendes Bauelement aus einem Kunststoff nachbilden.

Der Erfindung liegt die Aufgabe zugrunde, ein weitgehend universell einsetzbares faserverstärktes Kunststoffhalbzeug zur Verfügung zu stellen.

Diese Aufgabe wird bei einem Halbzeug der eingangs genannten Art dadurch gelöst, dass die Verstärkungsfasern zwischen zwei Lagen aus thermoplastischem Kunststoff angeordnet sind.

Ein derartiges Halbzeug lässt sich ähnlich verformen wie Metallbleche, bildet also in bestimmten Fällen eine Alternative zu Metallblech. Thermoplastischer Kunststoff lässt sich, gegebenenfalls unter Erwärmung, verformen, beispielsweise durch Tiefziehen. Die Verstärkungsfasern bleiben bei einer derartigen Verformung zwischen den Lagen aus dem thermoplastischen Kunststoff. Sie werden also geschont, weil sie nicht Einflüssen aus der Umgebung ausgesetzt werden. Die Kunststofflagen halten die Verstärkungsfasern wiederum in ihrer Position. Es treten keine oder zumindest wenige Faserbrüche auf, so dass die Zugfestigkeit in der Hauptrichtung, in der die Verstärkungsfasern verlaufen, beibehalten wird und zwar auch nach einer Verformung. Sobald der thermoplastische Kunststoff abgekühlt ist, ist das umgeformte Halbzeug wieder formstabil.

Vorzugsweise sind die Lagen als Folien ausgebildet. Diese Kunststoff-Lagen können daher relativ dünn sein. Die Folien können eine Stärke im Bereich von 0,01 bis 2 mm aufweisen. Vielfach wird es günstig sein, die Folien nicht allzu dick zu wählen, so dass der Anteil der Verstärkungsfasern vergleichsweise groß wird. Dadurch lässt sich ein gutes Verhältnis zwischen Masse und Zugfestigkeit erreichen.

Vorzugsweise sind die Lagen durch Zwischenräume zwischen Fasern miteinander verbunden. Damit ergibt sich ein noch besserer Zusammenhalt. Prinzipiell reicht zwar eine Verbindung einer oberen Lage mit den Verstärkungsfasern und eine untere Lage mit den Verstärkungsfasern aus, um das Halbzeug zu erzeugen. Wenn man aber die beiden Lagen durch Zwischenräume zwischen Fasern miteinander verbinden kann, ergibt sich ein zusätzlicher Zusammenhalt. Darüber hinaus werden die Verstärkungsfasern noch besser gegen eine seitliche Verschiebung geschützt.

Vorzugsweise sind zwischen zwei Lagen aus Kunststoff Verstärkungsfasern mit einer einzigen Ausrichtung angeordnet. In der Richtung dieser Ausrichtung ergibt sich dann eine besonders gute Zugfestigkeit. Das Halbzeug wird besonders belastbar in dieser Richtung. Vorzugsweise sind die Verstärkungsfasern als Glasfasern, Kohlenstofffasern, Gesteinsfasern, Keramikfasern, Kunststofffasern oder Naturfasern oder als Mischung aus diesen Fasern ausgebildet. Derartige Verstärkungsfasern können in Abhängigkeit von der gewünschten Verwendung für eine ausreichende Zugfestigkeit und Formbeständigkeit eines aus dem Halbzeug gefertigten Bauteils sorgen.

Vorzugsweise sind die Verstärkungsfasern aus dem gleichen Material wie der thermoplastische Kunststoff gebildet, wobei die Verstärkungsfasern einen höheren Schmelzpunkt und/oder eine höhere Zugfestigkeit als der Kunststoff der Lagen aufweist. Dies erleichtert die Wiederverwertbarkeit oder das Recycling des Halbzeugs. Man kann das Halbzeug dann beispielsweise wieder einschmelzen, wobei die Verstärkungsfasern nicht weiter stören, weil sie in der Schmelze untergehen.

Bevorzugterweise ist der Kunststoff aus einer Gruppe von Kunststoffen gewählt, die Polypropylene, Polyamide, Polyphenylsulfide, Polyetherketone, Polyetheretherketone und Polyethylene enthält. Derartige Kunststoffe stehen kostengünstig zur Verfügung. Sie erfüllen Voraussetzungen, um in vielen Bereichen für Bauteile verwendet zu werden.

Die Erfindung betrifft auch einen Halbzeugverbund mit mindestens zwei derartigen Halbzeugen, die aufeinander gelegt und miteinander verbunden sind. Ein einzelnes Halbzeug hat eine vergleichsweise geringe Dicke von beispielsweise 0,2 mm oder weniger. In manchen Fällen ist ein derartiges Halbzeug nicht belastbar genug. In diesem Fall kann man zwei oder mehr Halbzeuge übereinander stapeln und miteinander verbinden, beispielsweise unter Wärmezufuhr miteinander verpressen. Dadurch addieren sich die Festigkeitseigenschaften der einzelnen Halbzeuge.

Hierbei ist bevorzugt, dass die Verstärkungsfasern von unterschiedlichen Halbzeugen unterschiedliche Richtungen aufweisen. Man kann dann die Zugfestigkeit des Halbzeugverbundes in mehrere Richtungen erhöhen.

Die Aufgabe wird auch durch ein Verfahren zum Herstellen eines Halbzeugs aus Kunststoff und Verstärkungsfasern gelöst, bei dem man die Verstärkungsfasern zwischen zwei Lagen aus thermoplastischem Kunststoff anordnet.

Eine derartige Vorgehensweise ist relativ einfach automatisierbar, so dass das Halbzeug auch kostengünstig hergestellt werden kann.

Hierbei ist bevorzugt, dass man Faserstränge quer zu ihrer Längserstreckung ausbreitet und zwischen die Lagen des thermoplastischen Kunststoffs einbringt. Viele Fasern, beispielsweise Kohlenstofffasern, werden in Fasersträngen vertrieben, in der mehrere Tausend Einzelfasern zusammengefasst sind. Ein Faserstrang kann beispielsweise 12000, 24000, 48000 oder sogar 240000 Einzelfasern enthalten. Je mehr Fasern ein Faserstrang enthält, desto kostengünstiger ist er in der Regel. Die Faserstränge haben üblicherweise im Querschnitt eine Kreis- oder Ellipsenform. Bevor man die Fasern also zwischen den Kunststofflagen einbringen kann, werden die Faserstränge quer zu ihrer Längsrichtung ausgebreitet, um so genannte Faserbänder zu formen. Die Fäserbänder werden dann nebeneinander angeordnet, um eine UD-Faserlage (unidirektionale Faserlage) zu bilden. Diese UD-Faserlage wird dann zwischen die Kunststofflagen eingebracht. Die Erzeugung der UD-Faserlage kann quasi kontinuierlich erfolgen.

Bei der Erzeugung der UD-Faserlage werden die EinzelFaserstränge vorzugsweise entsprechend den geforderten Flächeneigenschaften der UD-Faserbahn nach Schichtdicke und Flächengewicht ausgebreitet. Die Einstellung des Flächengewichtes der UD-Faserbahn wird dabei vorzugsweise auf die Flächeneigenschaften der Kunststofflage, insbesondere der Foliendicke, so abgestimmt, dass im späteren faserverstärkten Kunststoffhalbzeug ein definierter Fasermasse- bzw. Faservolumengehalt erreicht wird. Hierzu sind die Einzelfaserrovings oder -stränge insbesondere entsprechend der enthaltenen Anzahl Einzelfasern auf eine vordefinierte Breite auszubreiten und zur flächigen UD-Faserbahn dann ebenfalls definierter Breite zusammenzuführen. Die in Produktionsrichtung laufende UD-Faserbahn wird mit den durch die Ausbreitung der einzelnen Faserstränge vordefinierten FlächenEigenschaften zwischen die von beiden Seiten der UD-Faserbahn zulaufenden Kunststofflagen eingebettet.

Vorzugsweise wickelt man die Kunststoffschichten dazu von Rollen ab. Damit lässt sich das Verfahren quasi kontinuierlich gestalten. Die UD-Faserlage aus ausgebreiteten Fasersträngen kann endlos zugeführt werden. Auch die Kunststofflagen können endlos zugeführt werden.

Vorzugsweise beaufschlagt man die auf der UD-Faserlage aufliegenden Kunststofflagen mit Druck und/oder erhöhter Temperatur. Dies kann beispielsweise mittels eines Druckwalzenpaares erfolgen, dessen Walzen mit einer gewissen Kraft gegeneinander gedrückt werden. Im Walzenspalt oder Nip eines derartigen Druckwalzenpaares kann die Dicke des Halbzeugs in gegebenen Grenzen eingestellt werden. Durch die erhöhte Temperatur ergibt sich ein Erweichen der Kunststofflagen, so dass die Verstärkungsfasern etwas in den Kunststoff eindringen können und sich der Kunststoff durch Lücken oder Öffnungen zwischen Verstärkungsfasern mit dem Kunststoff der anderen Lage verbinden kann.

Vorzugsweise wickelt man das hergestellte Halbzeug, also die verbundenen Kunststofflagen mit dazwischen liegenden Verstärkungsfasern zu einem Wickel auf. Man erhält dadurch ein Halbzeug in Form einer Rolle, von der praktisch beliebige Längen abgetrennt werden können, um Bauteile daraus herzustellen.

Die Erfindung wird im Folgenden anhand eines bevorzugten Ausführungsbeispiels in Verbindung mit einer Zeichnung beschrieben. Hierin zeigen:
- Fig. 1: eine schematische Darstellung einer Vorrich- tung zum Erzeugen eines Halbzeugs und
- Fig. 2: eine schematische Darstellung zur Erläuterung des Aufbaus des Halbzeugs.

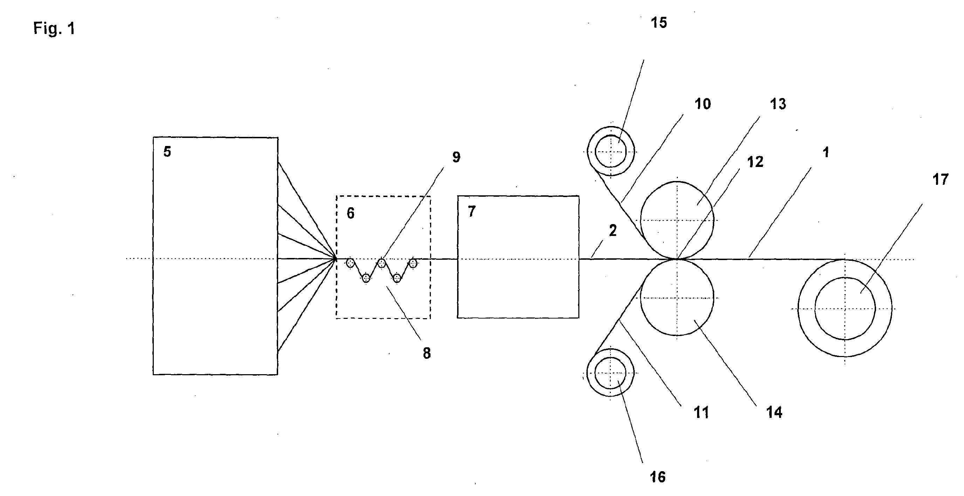

Fig. 1 zeigt schematisch eine Vorrichtung zur Erzeugung eines Halbzeugs 1, das als faserverstärkter Kunststoff ausgebildet ist.

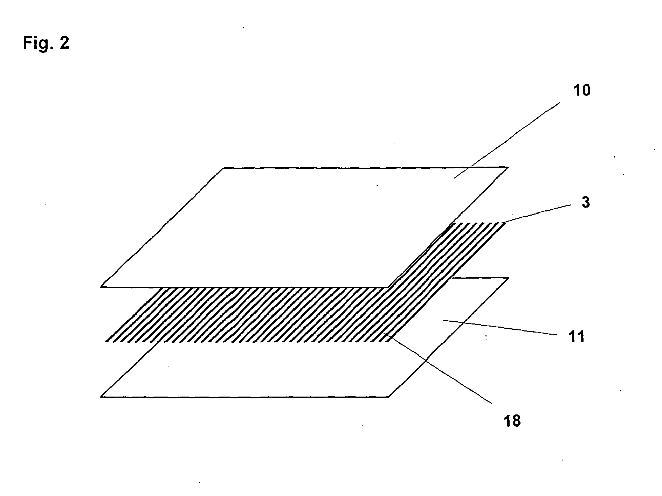

Hierzu wird eine UD-Faserlage 2 aus Verstärkungsfasern erzeugt, indem Einzelfaserstränge aus einer Vorratsanordnung 5 abgezogen und in einer Ausbreitvorrichtung 6 zu UD-Faserlagen mit definierter Breite und Flächenmasse ausgebreitet und zusammengefasst werden. In einer unidirektionalen oder UD-Lage haben alle Verstärkungsfasern 3 (siehe Fig. 2) die gleiche Ausrichtung. Diese Ausrichtung verläuft in Längsrichtung des Halbzeugs. Um diese UD-Lage 2 zu erzeugen, werden mehrere Einzelfaserstränge 4 aus der Vorratsanordnung 5 gezogen. Die Vorratsanordnung 5 wird beispielsweise durch ein Gatter gebildet, das mehrere Spulen enthält, auf die die Einzelfaserstränge 4 aufgewickelt sind.

Die Faserstränge 4 werden durch ein Lieferwerk 7 abgezogen und über die Ausbreiteinrichtung 6 geführt, in der sie unter einer gewissen Zugspannung über eine Anordnung 8 von Stäben 9 gezogen werden. Beim Durchlaufen der Ausbreiteinrichtung 6 versuchen die Fasern, die in dem Einzelfaserstrang 4 weiter von dem jeweiligen Stab 9 entfernt sind, sich näher an den Stab 9 anzunähern. Dabei verdrängen sie die Fasern, die näher an dem entsprechenden Stab 9 angeordnet sind, seitlich nach außen, wodurch sich eine Verbreiterung der Einzelfaserstränge 4 zu Bändern ergibt. Die nebeneinander liegenden Bänder bilden dann die UD-Faserlage 2.

Die UD-Faserlage 2 wird gemeinsam mit zwei Folien 10, 11 durch einen Walzenspalt oder Nip 12 geführt, der zwischen Walzen 13, 14 ausgebildet ist. Im Nip 12 wird eine erhöhte Temperatur erzeugt. Hierzu kann beispielsweise eine der beiden Walzen 13, 14 oder auch beide Walzen 13, 14 beheizt sein. Die beiden Walzen 13, 14 werden mit einem vorbestimmten Druck gegeneinander gepresst, so dass die beiden Folien 10, 11 unter Zwischenlage der UD-Faserlage 2 zum glasfaserverstärkten Halbzeug verbunden werden.

Die Folien 10, 11 werden von Vorratsrollen 15, 16 abgewickelt. Das Halbzeug 1 wird nach dem Durchlaufen des Nips 12 auf eine Rolle 17 aufgewickelt.

Die Folien 10, 11 sind aus einem thermoplastischen Kunststoff gebildet. Als thermoplastische Kunststoffe kommen beispielsweise Polypropylene, Polyamide, Polyphenylsulfide, Polyetherketone, Polyetheretherketone oder Polyethylene in Betracht. Diese Kunststoffe erweichen bei einer höheren Temperatur und werden beim Absenken der Temperatur wieder fest. Dementsprechend kann man das Halbzeug 1, wenn es benötigt wird, von der Rolle 17 abwickeln und auf die benötigte Länge schneiden. Danach kann man es in eine Form einlegen und unter Zufuhr von Wärme und Druck verformen. Eine derartige Verformung gleicht einem Tiefziehen eines Metallblechs, so dass man das Halbzeug 1 ähnlich wie ein Metallblech umformen kann.

Die UD-Faserlage 2 kann auch unmittelbar von einer Vorratsrolle abgewickelt werden.

Als Verstärkungsfaser kommen Glasfasern, Karbonfasern, Gesteinsfasern, Keramikfasern, Aramidfasern oder Naturfasern in Betracht. Man kann auch Kunststofffasern verwenden, die aus dem gleichen Material bestehen, wie die Folien 10, 11, aber einen höheren Schmelzpunkt und/oder eine höhere Zugfestigkeit aufweisen. Eine derartige Ausgestaltung erleichtert das Recycling.

Im Endeffekt ergibt sich ein Halbzeug 1, bei dem die Verstärkungsfasern 3 zwischen zwei Folien 10, 11 aus thermoplastischem Kunststoff eingebettet sind. Zwischen den Fasern 3 gibt es kleine Zwischenräume 18, durch die hindurch sich die beiden Folien 10, 11 miteinander verbinden können. Die Verbindung zwischen den Folien 10, 11 und den Verstärkungsfasern 3 wird dadurch praktisch unauflösbar.

Wenn die Festigkeit eines Halbzeugs 1 mit einer Lage nicht ausreicht, dann kann man problemlos mehrere Lagen des Halbzeugs 1 übereinander anordnen und sie unter Einwirkung von erhöhtem Druck und erhöhter Temperatur miteinander verbinden, um einen Halbzeugverbund zu bilden. Beispielsweise kann man hierfür eine Presse verwenden.

Wenn man mehrere Lagen von Halbzeug 1 übereinander anordnet, dann kann es günstig sein, unterschiedliche Lagen des Halbzeugs 1 mit unterschiedlichen Faserrichtungen zu verwenden. In diesem Fall entsteht ein Halbzeugverbund mit einer verbesserten Zugfestigkeit in mehreren Richtungen.

Das dargestellte Herstellungsverfahren kann quasi kontinuierlich ablaufen. Unterbrechungen ergeben sich nur dann, wenn die Rollen 15, 16 leer gelaufen sind oder die Spulen, auf die die Einzelfaserstränge 4 aufgewickelt sind, erneuert werden müssen.

Man kann die benötigten Längen der Folien 10, 11 und der Faserstränge 4 im Vorhinein abschätzen und die Größe der Rollen 15, 16 und die Größe der Rollen mit den Fasersträngen 4 so aufeinander abstimmen, dass sie etwa gleichzeitig leer laufen. In diesem Fall ist nur eine einzige Unterbrechung erforderlich, um alle Vorratsrollen zu ersetzen.

Durch den schichtartigen Aufbau des Halbzeugs 1, bei dem die Verstärkungsfasern 3 zwischen zwei Lagen aus thermoplastischem Kunststoff angeordnet sind, ergibt sich ein hervorragender Schutz für die Verstärkungsfasern 3. Insbesondere ist die Gefahr von Faserbrüchen relativ gering. Dadurch kann eine vorgegebene Zugfestigkeit in Richtung der Verstärkungsfasern auch nach einigen Umformungsvorgängen beibehalten werden.

Die Umformtemperatur zum Umformen des Halbzeugs liegen oberhalb der Gebrauchstemperatur des späteren Bauteils, das aus dem Halbzeug 1 hergestellt ist, beispielsweise im Bereich von 200° bis 400°C. Dementsprechend besteht keine Gefahr des Bauteilversagens des aus dem Halbzeug 1 gefertigten Bauteils unter Gebrauchstemperatur in Folge Temperatureinwirkung.

## Patentansprüche

1. Halbzeug mit Kunststoff und Verstärkungsfasern, **dadurch gekennzeichnet, dass** die Verstärkungsfasern (3) zwischen zwei Lagen (10, 11) aus thermoplastischem Kunststoff angeordnet sind.

2. Halbzeug nach Anspruch 1, **dadurch gekennzeichnet, dass** die Lagen (10, 11) als Folien ausgebildet sind.

3. Halbzeug nach Anspruch 1 oder 2, **dadurch gekennzeichnet, dass** die Lagen (10, 11) durch Zwischenräume (18) zwischen Verstärkungsfasern (3) miteinander verbunden sind.

4. Halbzeug nach einem der Ansprüche 1 bis 3, **dadurch gekennzeichnet, dass** zwischen zwei Lagen (10, 11) aus Kunststoff Verstärkungsfasern (3) mit einer einzigen Ausrichtung angeordnet sind.

5. Halbzeug nach einem der Ansprüche 1 bis 4, **dadurch gekennzeichnet, dass** Verstärkungsfasern (3) als Glasfasern, Kohlenstofffasern, Gesteinsfasern, Keramikfasern, Aramidfasern, Kunststofffasern oder Naturfasern ausgebildet sind.

6. Halbzeug nach einem der Ansprüche 1 bis 5, **dadurch gekennzeichnet, dass** Verstärkungsfasern (3) aus dem gleichen Material wie der thermoplastische Kunststoff gebildet sind, wobei die Verstärkungsfasern (3) einen höheren Schmelzpunkt und/oder eine höhere Zugfestigkeit als der Kunststoff der Lagen (10, 11) aufweist.

7. Halbzeug nach einem der Ansprüche 1 bis 6, **dadurch gekennzeichnet, dass** der Kunststoff aus einer Gruppe von Kunststoffen gewählt ist, die Polypropylene, Polyamide, Polyphenylsulfide, Polyetherketone, Polyetheretherketone und Polyethylene enthält.

8. Halbzeugverbund mit mindestens zwei Halbzeugen nach einem der Ansprüche 1 bis 7, die aufeinander gelegt und miteinander verbunden sind.

9. Halbzeugverbund nach Anspruch 8, **dadurch gekennzeichnet, dass** die Verstärkungsfasern (3) von unterschiedlichen Halbzeugen unterschiedliche Richtungen aufweisen.

10. Verfahren zum Herstellen eines Halbzeugs aus Kunststoff und Verstärkungsfasern, **dadurch gekennzeichnet, dass** man die Verstärkungsfasern (3) zwischen zwei Lagen (10, 11) aus thermoplastischem Kunststoff anordnet.

11. Verfahren nach Anspruch 10, **dadurch gekennzeichnet, dass** man Faserstränge (4) quer zu ihrer Längserstreckung ausbreitet und zwischen die Lagen (10, 11) einbringt.

12. Verfahren nach Anspruch 11, **dadurch gekennzeichnet, dass** man die Kunststofflagen (10, 11) von Rollen (15, 16) abwickelt.

13. Verfahren nach einem der Ansprüche 10 bis 12, **dadurch gekennzeichnet, dass** man die UD-Faserlage (2) mit den aufliegenden Lagen (10, 11) mit Druck und/oder erhöhter Temperatur beaufschlagt.

14. Verfahren nach einem der Ansprüche 10 bis 13, **dadurch gekennzeichnet, dass** man die Kunststofflagen (10, 11) mit dazwischen liegenden Verstärkungsfasern (3) aufwickelt.
